# EUROPÄISCHE PATENTSCHRIFT

(11) **EP 1 704 437 B1**
(45) Veröffentlichungstag und Bekanntmachung des Hinweises auf die Patenterteilung: **01.07.2015**
(21) Anmeldenummer: 05726214.9
(22) Anmeldetag: 14.01.2005
(51) Int. Cl.: G02C 13/00

(54) **VORRICHTUNG UND VERFAHREN ZUM ERMITTELN VON ZENTRIERDATEN FÜR EINE BRILLE**
DEVICE AND METHOD FOR DETERMINING CENTERING DATA USED FOR EYEGLASSES
DISPOSITIF ET PROCEDE DE DETERMINATION DE DONNEES DE CENTRAGE POUR DES LUNETTES

(30) Priorität: 16.01.2004 DE 102004002651; 15.09.2004 DE 102004045013
(43) Veröffentlichungstag der Anmeldung: 27.09.2006
(73) Patentinhaber: Carl Zeiss Vision GmbH, 73430 Aalen (DE)
(72) Erfinder: ROSS-MESSEMER, Martin, 73457 Essingen (DE); KUBITZA, Matthias, 73431 Aalen (DE); HÖLLER, Frank, 73434 Aalen (DE); KRUG, Herbert, 73433 Aalen (DE); WEGENDT, Holger, 73563 Mögglingen (DE)
(74) Vertreter: Braunger, Dieter
(86) Internationale Anmeldenummer: PCT/EP2005/000390
(87) Internationale Veröffentlichungsnummer: WO 2005/069063

(56) Entgegenhaltungen:
- EP-B- 0 812 098
- DE-A1- 10 033 983
- GB-A- 2 205 661
- US-A- 5 129 400
- KERSTEN D ET AL: "Convergece accommodation"" Journal of the Optical Society of America USA, Bd. 73, Nr. 3, März 1983 (1983-03), Seiten 322-328, XP002326184 ISSN: 0030-3941

## Beschreibung

Die Erfindung betrifft ein Vorrichtung zum Ermitteln von Zentrierdaten für eine Brille mit einer von einem Computer aus ansteuerbaren, elektronische Bilder aufnehmenden Aufnahmeeinheit, die hinter einem Teilerelement angeordnet ist, und mit einer Fixationseinrichtung. Die Erfindung betrifft des Weiteren ein Verfahren zum Ermitteln von Zentrierdaten für eine Brille.

Brillenanpassgeräte dienen zur genauen Festlegung der optischen Zentrierung bei bereits anatomisch angepasster Brillenfassung. Der für die Erfüllung der Augendrehpunktforderung notwendige vertikale Abstand des Zentrierpunktes vom Nulldurchblickpunkt richtet sich unter anderem nach der Vorneigung der Fassung. Dementsprechend arbeiten Brillenanpassgeräte entweder mit einem konstanten Vorneigungswinkel oder sie gestatten die Messung des Vorneigungswinkels bei natürlicher Kopf- und Körperhaltung.

Bei der optischen Brillenglaszentrierung müssen die vertikalen und horizontalen Zentrierdaten der Brille X_{R}, X_{L}, Y_{R}, Y_{L} gemessen werden. Es ist aus der Zeiss Broschüre 20-759-e bekannt, dies mit einer Videoeinrichtung zu machen, vor der eine Testperson in einem Abstand von ca. 5 m Aufstellung nimmt. Anhand der Videobilder werden dann die Zentrierdaten bestimmt. Bei dieser Vorgehensweise muss ein entsprechend großer Platz zur Verfügung gestellt werden.

Die optimale Korrektion setzt voraus, dass der Sitz der Fassung (anatomische Brillenanpassung) in die Anpassung der Brille einbezogen wird. Die Vorrichtung Video Infral der Firma Carl Zeiss erfasst den Sitz der Fassung dreidimensional, so dass die zuvor ermitteltten Korrektionswerte, z.B. Brillenglasdurchmesser, Brillenglasgewicht, minimale Randdicke, minimale Mittendicke in das optimale Brillenglas umgesetzt werden können. Dabei werden über zwei Videokameras simultan frontale und seitliche Aufnahmen gemacht, digitalisiert und im angeschlossenen Rechner abgelegt. In den Digitalbildern können die Lagen der Pupille, des Hornhautscheitelabstands und der charakteristischen Konturen der Fassung markiert werden. Aus diesen Marken ermittelt der Rechner die optimalen Parameter eines Brillenglases für brillenträgerrichtiges Sehen. Unter Hornhautscheitelabstand wird allgemein der Abstand zwischen bildseitigem Brillenglasscheitelpunkt und Cornea verstanden.

In der EP 0 812 098 B1 ist ein Videoberatungssystem offenbart mit einer von einem Computer aus ansteuerbaren, elektronische Bilder aufnehmende Aufnahmeeinheit. Ein derartiges Videoberatungssystem dient der Kundenberatung in Fachgeschäften bei der Auswahl einer neuen Brillenfassung

Des Weiteren ist eine Videoeinrichtung Visu-Point der Ulev GmbH bekannt, bei der eine Testperson aus nur kurzem Abstand, z.B. von nur einem Meter, ein Objekt fixiert. Dieses Fixierobjekt kann z.B. eine über einer Videokamera angeordnete LED sein. Die Videokamera nimmt Bilder der Testperson auf, während diese das Fixierobjekt betrachtet. Nachteilig hieran ist, dass die bei der Fixierung entstehende Konvergenzstellung des Augenpaares über die rein geometrische Konvergenz herausgerechnet wird.

Die DE 100 33 983 A1 beschreibt eine ähnliche Einrichtung zur Bestimmung der Brillenglas-Zentrierdaten. Als Fixierobjekt ist eine Fixierleuchte auf einem an der Brillenfassung des Kunden angebrachten Aufsteckbügel vorgesehen, die sich in einem Spiegel für den Kunden sichtbar spiegelt.

US 5,129,400 A offenbart eine Vorrichtung zur Untersuchung von Gewebe eines Augenhintergrundes, wobei ein Laserstrahl Verwendung findet und durch den Augenhintergrund ein Speckle generiert werden soll.

Aufgabe der Erfindung ist es, ein verbesserte Vorrichtung zur Ermittlung von Zentrierdaten für eine Brille zur Verfügung zu stellen, die es für Testpersonen unterschiedlichster Sehstärke erlaubt die relativen Zentrierdaten X_{R},X_{L},Y_{R},Y_{L} (nach dem Kastensystem: X_{R} =Zentrierpunktkoordinate rechts horizontal; X_{L} =Zentrierpunktkoordinate links horizontal; Y_{R} = Zentrierpunktkoordinate rechts vertikal, ; Y_{L} = Zentrierpunktkoordinate links vertikal) bei habitueller Haltung, d.h. bei für die Testperson entspannter Haltung, z.B. im Stehen oder Sitzen, aus kurzer Entfernung zu messen.

Die Aufgabe der Erfindung wird durch eine Vorrichtung nach Anspruch 1 gelöst. Bei der erfindungsgemäßen Vorrichtung zum Ermitteln von Zentrierdaten für eine Brille ist die Fixationseinrichtung eine zumindest ein Specklemuster erzeugende Fixationseinrichtung.

Die Aufgabe der Erfindung wird zudem durch ein Verfahren nach Anspruch 18 gelöst. Dort wird ein Verfahren zum Ermitteln von Zentrierdaten für eine Brille offenbart, bei dem ein Specklemuster als Fusionsreiz für einen zu untersuchenden Kunden erzeugt wird, eine Bildaufnahme zumindest der bebrillten Augenpartie des Kunden gemacht wird und anhand dieser Bildaufnahme nach mathematischen Verfahren die Zentrierdaten für die Brille bestimmt werden.

Zur Ermittlung der Zentrierdaten trägt der Kunde im Allgemeinen eine Brillenfassung, d.h. eine Brille ohne Brillengläser. Im Falle von fassungslosen Brillen (Bohrbrille, Nylorbrille) kann mit Stützscheiben gearbeitet werden, die Messungen nicht negativ beeinflussen.

Die Konvergenz besteht aus einem motorischen und sensorischen Anteil des Augenpaares. Unter motorisch wird der durch Muskelbewegung bewirkte Konvergenzanteil verstanden. Unter sensorisch wird der durch Verschaltung von Nervenzellen bewirkte Konvergenzanteil verstanden. Als Fusion wird die Gesamtheit der Vorgänge bezeichnet, die aufgrund der von den Objekten ausgehenden Fusionsreize zum binokularen Einfachsehen führen und dieses aufrecht erhalten. Diese Vorgänge sind weitgehend unbewusst (Fusionszwang). Dabei greifen motorische und sensorische Fusion ineinander. Motorische Fusion bewirkt mit Hilfe der Augenbewegungsmuskeln eine Vergenz, um die Augen möglichst genau auf das Fusionsobjekt auszurichten. Sensorische Fusion bewirkt binokulares Einfachsehen mit Hilfe von Schaltvorgängen im Nervensystem, auch bei geringfügigen Disparationen, das heißt wenn die beiden zusammengehörigen monokularen Bilder im Augenpaar nicht genau auf den korrespondierenden Netzhautstellen liegen.

Die wirkliche Konvergenzstellung der Augen einer Testperson ist also nicht notwendigerweise die sich aus der Lage des Fixierobjektes ergebende. In der Regel ist die motorische Konvergenz kleiner als die nach geometrischen Betrachtungen notwendige. Durch die sensorische Konvergenz versucht die Testperson diese Differenz auszugleichen. So entstehen unweigerlich größere Streuungen und Fehler der Zentrierdaten, je nach motorischen bzw. sensorischen Anteil der Konvergenz des Klienten.

Mit der erfindungsgemäßen Vorrichtung kann bei bereits anatomisch angepasster Brillenfassung die Festlegung der optischen Zentrierung erfolgen. Der für die Erfüllung der Augendrehpunktforderung notwendige vertikale Abstand des Zentrierpunktes vom Nulldurchblickpunkt richtet sich nach der Vorneigung der Fassung. Der Vorneigungs- und seitliche Kopfneigungswinkel kann bei natürlicher Kopf- und Körperhaltung ermittelt werden. Des Weiteren kann auch der Abstand der Pupillen einer Testperson ermittelt werden. Die Vorrichtung kann zudem mit einer Einrichtung zur Bestimmung des Hornhautscheitelabstands versehen sein. Diese misst den zur Fassungsebene senkrechten Abstand des Fassungsrandes oder Brillenglasrandes von der Hornhautvorderfläche. Zu diesem Messwert muss die Scheiteltiefe des durchgebogenen Brillenglases addiert werden.

Die optimale Korrektion setzt voraus, dass der Sitz der Fassung in die Anpassung der Brille einbezogen wird. Zu diesem Zweck werden Aufnahmen eines Kunden von vorne und von der Seite gemacht und anhand dieser Aufnahmen die Lagen der Pupille, des Hornhautscheitelabstands und der Fassung ermittelt. Hierzu wird dem Kunden bevorzugt ein Messbügel auf die Brillenfassung aufgesetzt. Dieser Messbügel kann z.B. Zielmarkierungen aufweisen, die eine Bestimmung der relevanten Winkel und Werte nach dem Parallaxenprinzip ermöglichen. Relevante Winkel und Werte sind z.B. die Vorneigung, die Kopfneigung zur Seite, die Kopfdrehung zur Seite und der Hornhautscheitelabstand.

Der gegenseitige Abstand der Zentrierpunkte P_{R} und P_{L} für die beiden Brillengläser in einer Brillenfassung heißt Zentrierpunktabstand z und ist die Summe aus dem rechten und linken monokularen Zentrierpunktabstand (Z = Z_{R} + Z_{L}). Er entspricht dem gegenseitigen Abstand der Durchblickpunkte in der Korrektionsbrille und ist bei nicht prismatischen Brillengläsern gleich dem Mittenabstand. Der Mittenabstand ist nach DIN 13666 der horizontale Abstand zwischen den optischen Mittelpunkten der Brillengläser in einer Brille, wenn jegliches verordnete Prisma neutralisiert wurde, bei Gleitsicht-Brillengläsern der Abstand zwischen den Anpasspunkten. Zur Festlegung der beiden Zentrierpunkte können ihre Koordinaten x und y Verwendung finden. Dabei gilt in der Horizontalen Z_{R} + Z_{L} = X_{R} + X_{L} + d, wobei d der Abstand zwischen den Brillengläsern ist.

Das Speckle-Muster hat die Eigenschaft für die Testpersonen unabhängig von Ihrer Fehlsichtigkeit immer als scharfes Fixationsmuster zu erscheinen. Das gilt nicht nur für myope Augen (Kurzsichtigkeit) sondern auch für hyperope Augen (Weitsichtigkeit). Speckles sind Interferenzerscheinungen, die im Raum entstehen. Das fehlsichtige Auge sieht die Speckles in der Raumebene, die seiner Fernrefraktionspunktebene entspricht. Es ist also sehr einfach, die Aufmerksamkeit einer Testperson auf ein solches Muster zu lenken und während der Videoaufnahme die Aufmerksamkeit aufrechtzuerhalten.

Durch die erfindungsgemäße Vorrichtung wird es weiterhin ermöglicht, die Zentierdaten einer Testperson aus der Nähe, d.h. aus einem Abstand von kleiner 2 m, bevorzugt kleiner 1,5 m zu vermessen, wobei das Fixierobjekt aber ins Unendliche, zumindest aber in eine Entfernung von mindestens 5 m abgebildet ist und dort der Testperson erscheint.

Zur richtigen Positionierung des Kunden kann eine Standmarkierung für den Kunden auf den Fußboden projiziert werden.

Mit der Erfindung kann erreicht werden, dass die Augen einer Testperson während der Ermittlung der Zentrierdaten nicht konvergieren, d.h. dass sich die Fixierlinien beider Augen nicht nach innen bewegen.

Vorteilhafte Ausführungsformen der Erfindung sind in den Unteransprüchen berücksichtigt.

Bei der erfindungsgemäßen Vorrichtung kann vorgesehen sein, die Fixationseinrichtung als eine zumindest ein bestimmtes Specklemuster erzeugende Fixationseinrichtung auszubilden. Der Anwender der erfindungsgemäßen Vorrichtung kann für bestimmte Kunden, z.B. stark kurzsichtige Kunden, bestimmte Specklemuster verwenden, die sich für diesen Kundenkreis als besonders gut geeignet herausgestellt haben. Das Specklemuster kann beispielsweise ringförmig, kreisförmig, kreuzförmig oder sternförmig ausgebildet sein. Auch eine Kombination dieser Specklemuster kann zum Einsatz kommen. Es können also Speckles erzeugt werden, denen als gemeinsame äußere Form eine bestimmte Form z.B. ein Kreuz superponiert ist, so dass dann ein bestimmtes Specklemuster, z.B. ein kreuzförmiges Specklemuster, entsteht.

Bei der erfindungsgemäßen Vorrichtung kann vorgesehen sein, die Aufnahmeeinheit als Videokamera oder Photoapparat auszubilden.

Die Fixationseinrichtung kann eine Strahlungsquelle umfassen, die einen kohärenten Lichtstrahl über ein Streuelement als Specklemuster auf das Teilerelement wirft. Die Strahlungsquelle kann einen Laseremitter umfassen. Vorzugsweise ist das eine Laserdiode, oder ein He-Ne-Laser. Das Teilerelement kann als teildurchlässiger Spiegel, planparallele Platte oder Strahlteilerwürfel ausgebildet sein. Die Strahlungsquelle emittiert also einen kohärenten Lichtstrahl, dieser kann bereits ein bestimmtes Muster aufweisen, z.B. durch ein DOE hervorgerufenes Kreuz. Der Lichtstrahl trifft auf das Streuelement und wird von dort als Specklemuster auf das Teilerelement geworfen.

Die erfindungsgemäße Vorrichtung kann mit einem bewegbaren, insbesondere rotierbaren Streuelement versehen sein. Das Streuelement kann mittels eines Motors in Bewegung versetzt werden. Das Streuelement kann z.B. mit 0,5 bis 5 U/min, bevorzugt, 1 bis 2 U/min rotieren. Eine Mindestrotationsgeschwindigkeit ist hierbei erforderlich um den physiologischen Reiz einer Bewegung für die Testperson auszulösen.

Des Weiteren kann bei einer bevorzugten Ausführungsform der erfmdungsgemäßen Vorrichtung vorgesehen sein, dass das Specklemuster ins Unendliche, zumindest aber auf einen Abstand größer 5m abgebildet ist. Dabei kann das Specklemuster über eine zwischen Streuelement und Teilerelement angeordnete Kollimatoroptik ins Unendliche, zumindest aber auf einen Abstand größer 5m abgebildet sein.

Die Kollimatoroptik kann durch konventionelle sphärische Linsenflächen realisiert werden. Um den Einfluss der sphärischen Aberration gering zu halten, sollte die Brennweite der Linse entsprechend groß gewählt werden, z.B. f' = 800 bis 1200 mm, bevorzugt f = 1000 mm, damit das Öffnungsverhältnis erträglich ist. Die Kollimatoroptik kann mit asphärischen Linsenflächen, insbesondere mit asphärischen Fresnellinsenflächen ausgebildet sein. Dadurch kann die Korrektur der sphärischen Aberration auch bei Verwendung kleinerer Linsenbrennweiten erfolgen z.B. f' = 300 mm. Durch die Verwendung von asphärischen Fresnel-Linsen wird zudem der mechanische Aufwand bei der Linsenhalterung deutlich reduziert. Bei der Verwendung von sphärischen Fresnellinsenprofilen sollte bevorzugt eine Brennweite von mindestens 500 mm Verwendung finden.

Die Ausgangsapertur der Vorrichtung sollte an die Summe von Augenabstand und Pupillendurchmesser einer möglichst großen Anzahl von Testpersonen angepasst sein und daher mindestens 60 mm, bevorzugt mehr als 90 mm betragen. Die Ausgangsapertur ist durch die nach unendlich projizierende Optik gegeben. Bei ausreichend großer Ausgangsapertur können beide Augen einer Testperson das Specklemuster detektieren.

Es kann bei einer bevorzugten Ausführungsform der erfinderischen Vorrichtung vorgesehen sein, dass zwischen Streuelement und Teilerelement bevorzugt zwischen Streuelement und Kollimatoroptik ein Umlenkspiegel angeordnet ist. Durch eine Faltung des optischen Aufbaus, d.h. eine Strahlumlenkung kann die Baugröße der Vorrichtung deutlich reduziert werden.

Vorteilhafterweise ist die Aufnahmeeinrichtung mit einem Autofokus ausgestattet, so dass die aufgenommenen Bilder immer scharf sind. Zusätzlich lässt sich vorteilhafterweise bei der verwendeten Kamera der ZOOM (Bildausschnitt) vom PC aus steuern.

Sollte die Bildaufnahmeeinrichtung für die jeweilige Person zu hoch oder niedrig angeordnet sein, so kann die Bildaufnahmeeinrichtung hoch und runtergefahren werden. Wahlweise kann die Bildaufnahmeinrichtung auch verkippt werden. Der zur Kompensation der Körpergrößen benötigte Kippwinkel kann dann bei der Berechnung der Vorneigung bzw. der Zentrierwerte zu berücksichtigt werden.

Des Weiteren kann vorteilhafterweise die Fixationseinrichtung zumindest ein diffraktives optisches Element (DOE) oder einen Wellenfrontmodulator, d.h. Spatial Light Modulator (SLM), umfassen. Mit dem SLM können variable DOE erzeugt werden. Es können SLM in reflektiver sowie in transmittiver Ausführung eingesetzt werden. Wahlweise können auch mehrere DOE nacheinander oder auch miteinander eingesetzt werden. Das SLM oder DOE können dazu ausgebildet sind, ein z.B. kreuz- oder ringförmiges Muster oder eine Kombination eines kreuz- und ringförmigen Musters zu erzeugen.

Vorteilhafterweise kann vorgesehen sein, einen der Aufnahmeeinheit zugeordneten Blitz mit einem Lichtleiter zu verbinden, wobei der Lichtleiter bevorzugt ein in Richtung des zu vermessenden Kunden hinführender Lichtleiter ist.

Die mittels Laser und DOE bzw. SLM auf dem Streuelement erzeugten Specklemuster können von Kunden unterschiedlicher Sehstärke als scharfe Muster wahrgenommen werden. Dadurch dass bestimmte DOE bzw. SLM, Streuelemente und Laser Verwendung finden können, können wiederholbare Specklemuster bestimmter Ausgestaltung generiert werden.

Schließlich kann vorgesehen sein, das Streuelement als Streuscheibe oder Streuwalze auszubilden. Es sind auch weitere geometrische Formen für das Streuelement vorstellbar. So kann das Streuelement auch als lateral hin und her verschiebbare Streuplatte oder als streuender Vorhang ähnlich einem Laufband ausgebildet sein. Die Streuelemente können aus Kunststoff, Glas, Metall oder anderen geeigneten Materialien hergestellt sein. Die streuenden Oberflächen können beispielsweise sandgestrahlt sein. Die mittlere Rauhigkeit beträgt vorzugsweise zwischen 5 und 50 µ rms.

Bei dem erfindungsgemäßen Verfahren finden bevorzugt Ausführungsformen der erfindungsgemäßen Vorrichtung Anwendung.

Mit dem erfindungsgemäßen Verfahren und erfindungsgemäßer Vorrichtung wird es für Testpersonen unterschiedlichster Sehstärke ermöglicht, deren relative Zentrierdaten bei habitueller Haltung aus kurzer Entfernung zu messen.

Bevorzugte Ausführungsformen der erfindungsgemäßen Vorrichtung sowie des erfmdungsgemäßen Verfahrens sind in den Figuren 1 bis 9 dargestellt. Es zeigen:
- Figur 1:: eine Vorrichtung zur Bestimmung der Zentrierdaten einer Brille mit einem Fixiertarget,
- Figur 2:: eine Vorrichtung zur Bestimmung der Zentrierdaten einer Brille mit einer rotierbaren Streuscheibe und Kollimatoroptik, und
- Figur 3:: eine Vorrichtung zur Bestimmung der Zentrierdaten einer Brille nach Figur 2 mit zusätzlichem Umlenkspiegel.
- Figur 4:: eine Vorrichtung zur Bestimmung der Zentrierdaten mit Streuscheibe und DOE
- Figur 5:: eine Vorrichtung zur Bestimmung der Zentrierdaten mit Streuscheibe und SLM
- Figur 6:: eine Vorrichtung zur Bestimmung der Zentrierdaten mit Streuwalze und DOE
- Figur 7:: eine Streuplatte
- Figur 8:: einen Streuvorhang
- Figur 9:: ein kreuzförmiges Specklemuster

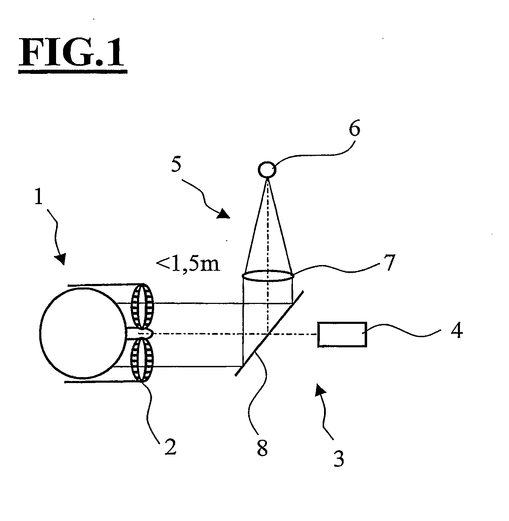

In Figur 1 ist schematisch der Kopf 1 mit Brillenfassung 2 einer Testperson dargestellt, die zur Bestimmung ihrer Zentrierdaten im Abstand von weniger als 1,5 m, z.B. 0,5 m, in eine Ausführungsform der erfindungsgemäßen Vorrichtung 3 blickt. Die Vorrichtung 3 ist ebenfalls schematisch dargestellt und umfasst eine Aufnahmeeinheit in Form einer Videoeinrichtung 4 und eine Fixationseinrichtung 5. Die Fixationseinrichtung 5 umfasst ein Fixiertarget 6, sowie eine Kollimatoroptik 7 und ein Teilerelement 8. Das Fixiertarget 6 erzeugt ein Specklemuster, indem kohärentes Licht auf ein nicht dargestelltes Streuelement, beispielsweise eine Streuscheibe definierter Rauigkeit geworfen wird. Das Teilerelement 8 ist als teildurchlässiger Spiegel ausgebildet. Die Kollimatoroptik 7 kann eine oder mehrere Linsen umfassen.

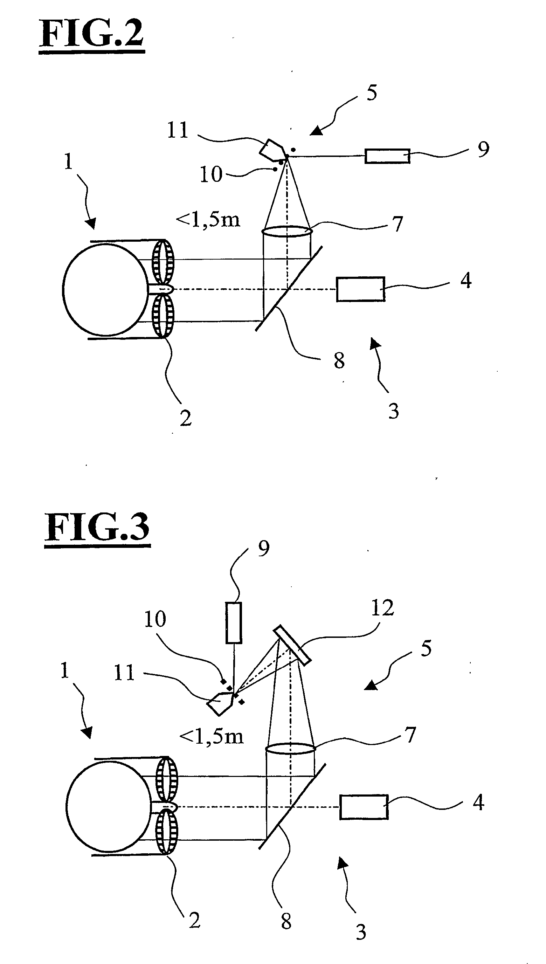

In Figur 2 ist anstelle des Fixiertarget 6 ein Laseremitter 9 vorgesehen, der einen Lichtstrahl auf ein Streuelement in Form einer Streuscheibe 10 wirft. Das Teilerelement 8 ist als plattenförmiger teildurchlässiger Spiegel ausgebildet. Das Teilerelement 8 ermöglicht das genaue Aufeinanderliegen der optischen Strahlen des Fixations- und des Beobachtungsstrahlengangs. Zur Ermittlung der Fixierdaten blickt nun die Testperson in Richtung Videoeinrichtung 4. Damit insbesondere auch stark fehlsichtige Personen in die richtige Richtung blicken, erzeugt der Laseremitter 9 einen Laserstrahl, der an der Streuscheibe 10 gestreut wird und somit Specklemuster erzeugt. Diese werden über eine Kollimatoroptik 7 über das vor der Videoeinrichtung 4 angeordnete Teilerelement 8 in das Blickfeld der Testperson geleitet. Die Streuscheibe 10 kann wahlweise mit einem Motor 11 ausgestattet sein, der die Streuscheibe10 dreht oder anderweitig bewegt. Je nach Fehlsichtigkeit der Testperson stellt sich eine resultierende Geschwindigkeit der einzelnen Speckles ein. Dadurch, dass die Speckles immer scharf erscheinen, können auch stark fehlsichtige Testpersonen die Specklemuster fixieren und somit die richtige Position für die Videoaufnahme einnehmen.

In Figur 3 ist die Vorrichtung nach Figur 2 um einen Umlenkspiegel 12 erweitert. Das vom Laser auf die Streuscheibe10 emittierte Licht trifft hierbei zuerst auf einen Umlenkspiegel 12 und erst anschließend auf die Kollimatoroptik 7. Durch die Strahlumlenkung kann die Baugröße der Vorrichtung deutlich reduziert werden. Hierdurch wird es ermöglicht, eine solche Vorrichtung auch in kleinen Räumen aufzustellen.

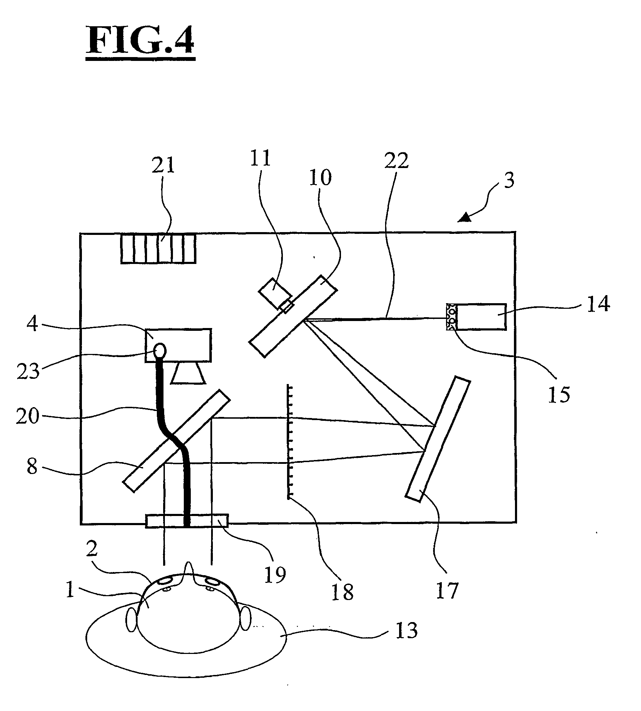

Figuren 4, 5 und 6 zeigen schematisch dargestellte Ausführungsformen der erfindungsgemäßen Vorrichtung, die der zu vermessenden Person, z.B. einem Kunden eines Augenoptikers, einen besonders guten Fusionsreiz geben.

In Figur 4 weist die erfindungsgemäße Vorrichtung 3 eine Laserdiode 14 auf, die leistungsgeregelt sein kann und die bevorzugt schmalbandig zwischen 610 und 680 nm emittiert.

Vor der Laserdiode 14 ist ein diffraktives optisches Element (DOE) 15 angeordnet, dass einen Laserstrahl 22 der Laserdiode 14 so modifizieren kann, dass die zeitliche Kohärenz erhalten bleibt und dass auf einer Streuscheibe 10 ein gewünschtes fusionsfähiges Muster, z:B. ein kreuzförmiges Specklemuster entsteht, das beim Kunden einen Fusionsreiz ausübt.

Nicht jedes modulierte und auf die Streuscheibe projizierte Winkelspektrum löst einen ausreichenden Fusionsreiz beim zu untersuchenden Kunden aus. Ein kreisförmiges auf die Streuscheibe projiziertes Winkelspektrum bewirkt nur einen schwachen Fusionsreiz, wohingegen ein kreisförmiger oder elliptischer Ring oder ein Kreuz oder ein mehrstrahliger Stern oder Überlagerungen dieser Figuren beim Kunden einen deutlichen Fusionsreiz auslösen können.

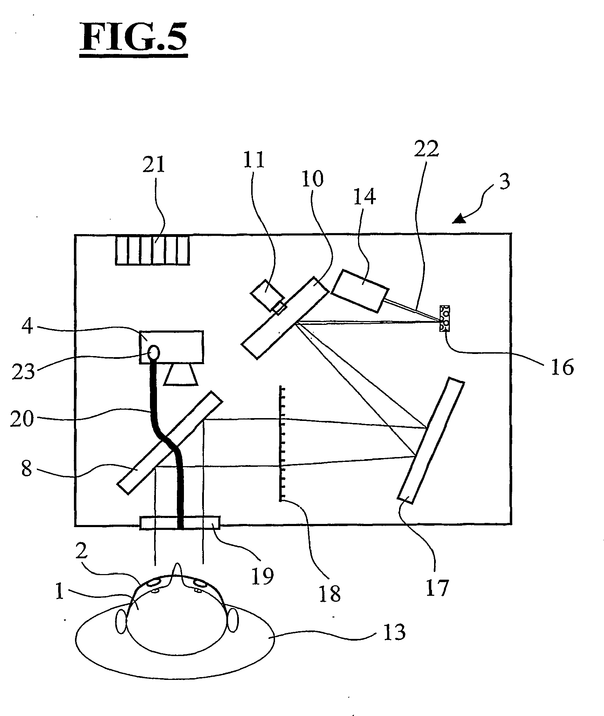

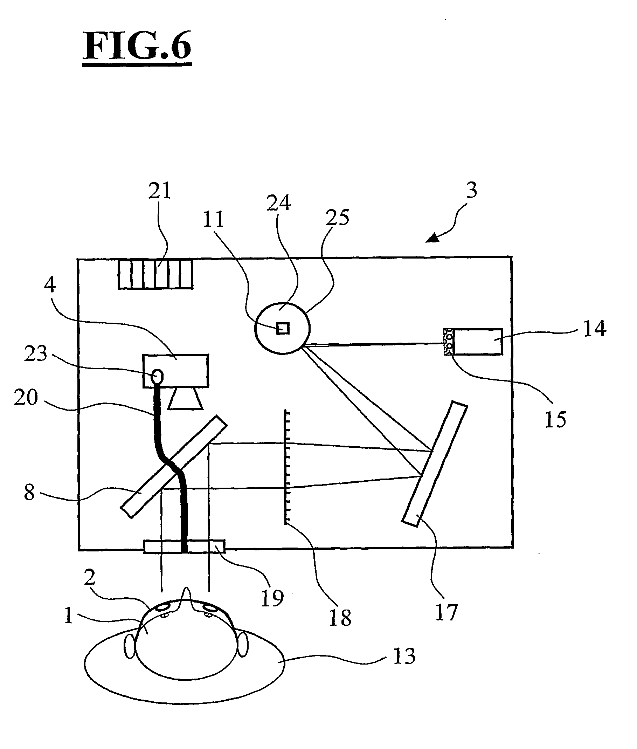

DOE sind in Figur 4 und 6, ein SLM ist in Figur 5 dargestellt. Bevorzugt ist das durch das DOE oder SLM projizierte Winkelspektrum so ausgelegt, dass es nur im Bereich des schärfsten Sehens wahrgenommen wird. Das heißt bevorzugt ein Winkelspektrum von maximal 5°. In der Mitte der Netzhautgrube, die mit 0° bezeichnet wird ist die relative Sehschärfe am größten. Dadurch werden bevorzugt die Zapfen im Auge des Kunden angeregt und die Stäbchen geschont.

Das Streuelement, beispielsweise die Streuscheibe 10, ist so ausgebildet, dass sie vorzugsweise ein Kontinuum an Ortsfrequenzen bereitstellt. Bevorzugt werden Streuwinkel von 0,05 bis 5 ° erzeugt. Mittels eines Motors 11 kann das Streuelement rotiert werden, z.B. mit 0,5 bis 5 U/min, bevorzugt 1 bis 2 U/min.

Der Laserstrahl wird von dort über einen Spiegel 17 und eine Linse 18, bevorzugt eine Fresnellinse, auf ein Teilerelement 8 geworfen und trifft durch eine Schutzelement 19 hindurch auf die Augen des Kunden 13, der eine Brillenfassung 2 aufgesetzt hat. Das Schutzelement hat bevorzugt die Ausführungsform einer Schutzscheibe und ist bevorzugt aus Glas. Die bildseitige Brennebene der Fresnellinse 18 liegt in der Ebene der Streuscheibe 10.

Durch das mit dem Laserstrahl so erzeugte Specklemuster wird der bebrillte Kunde 13 dazu ermuntert direkt in die Vorrichtung 3 zu schauen und die gesehenen Bilder natürlich zu fusionieren. Damit kann die Bestimmung der Kundendaten schnell und korrekt erfolgen. Mit einer Aufnahmeeinheit 4, beispielsweise einer Videoeinrichtung oder einer Photokamera wird das Gesicht des Kunden 13 bzw. zumindest die bebrillte Augenpartie des Kunden 13 aufgenommen.

Ein an der Videoeinrichtung 4 angeordneter Blitz 23 ist mit einem Lichtleiter 20 verbunden. Dieser Lichtleiter 20 verläuft von dem Blitz 23 zur Schutzscheibe 19 hin und ermöglicht somit eine bessere Ausnutzung des Blitzlichtes.

Die erfindungsgemäße Vorrichtung 3 weist eine integrierte Steuer- und Auswerteeinrichtung 21 auf. Diese kann auch die Spannungsversorgungen für die internen Stromverbraucher umfassen.

Mittels des DOE 15 und der Streuscheibe 10 kann der Laserstrahl ein Specklemuster erzeugen, das beispielsweise einen kreuzförmigen äußeren Umriss aufweist.

Durch das mit Hilfe des DOE 15 auf die Streuscheibe 10 geschriebene Muster wird durch die Streuscheibe ein Specklemuster erzeugt, dass einen deutlichen Fusionsreiz hervorruft. Die Form der auf die Streuscheibe 10 geschriebenen Muster und dadurch generierten Specklemuster sind entscheidend für die Stärke des Fusionsreizes. Ein einfacher Fusionsreiz kann dadurch erlangt werden, dass ein punktförmiges Muster mit einem gaussähnlichen Profil auf der Streuscheibe erzeugt wird. Für einen starken Fusionsreiz eignet sich eine kreuzförmiges, ein ringförmiges Muster oder eine Kombination aus beiden Mustern. Dabei wird ein Winkelbereich von maximal 5° den zu untersuchenden Augen zur Verfügung gestellt. Mit 0° wird die Mitte der Netzhautgrube bezeichnet, der Ort höchster relativer Sehschärfe.

In Figur 5 ist ein Wellenfrontmodulator, d.h. ein Spatial Light Modulator (SLM) 16 vorgesehen. Dieser SLM 16 kann variable DOE 15 erzeugen. Es können sowohl SLM 16 in reflektiver als auch in transmittiver Ausführung eingesetzt werden. In Figur 5 ist ein reflektives SLM 16 dargestellt. In Figur 4 kann das einfache DOE 15 auch durch ein transmittives SLM 16 ersetzt werden.

Mit einem SLM 16 wird es ermöglicht, verschiedenste Specklemuster zu generieren, indem mit dem SLM 16 in gewünschter Geschwindigkeit und Abfolge verschieden geformte DOE 15 erstellt werden. Dadurch können mit dem Laserstrahl unterschiedliche definierte Muster, z.B. ein Kreuz erzeugt werden, die auf die Streuscheibe 10 projiziert werden, wo dann mit Hilfe der Streuscheibe 10 Specklemuster generiert werden. Damit kann einem größeren Kundenkreis der Pupillenabstand gemessen werden. Bislang waren Kunden mit größeren prismatischen Fehlern mit den üblichen einfachen punktförmigen Mustern nicht vermessbar. Mit den besonderen Mustern wird auch für diesen Personenkreis ein geeigneter Fusionsreiz zur Verfügung gestellt.

Sollen verschiedene Muster erzeugt werden und steht ein SLM 16 nicht zur Verfügung so können wahlweise mehrere unterschiedliche Muster erzeugende DOE 15 eingesetzt werden, die z.B. über einen Schieber nacheinander in den Strahlengang geschoben werden können.

Durch die erfindungsgemäße Vorrichtung ist das durch das DOE 15 modifizierte Strahlprofil von beiden Augen des zu vermessenden Kunden, der eine Brillenfassung trägt, vollständig erfassbar.

In Figur 6 weist die erfindungsgemäße Vorrichtung 3 eine Streuwalze 24 auf, die anstelle einer Streuscheibe angebracht ist. Die Streuwalze 24 ist als rotierbare Trommel mit streuender Oberfläche 25 ausgebildet. Die Streuwalze kann senkrecht oder horizontal eingebaut sein, bevorzugt bei ca. 45° ±5° relativ zu der Achse, die durch die Augen einer Testperson gebildet wird. Die Streuwalze kann durch einen Motor 11 angetrieben werden. Der Motor kann beispielsweise auf der Achse der Trommel sitzen oder im Bereich der Achse angeordnet sein. Das fusionsreizauslösende Muster wird dann beispielsweise unter ca. 45° zur Trommelachse projiziert oder parallel zur Trommelachse projiziert. Bei einem zu erzeugenden kreuzförmigen Specklemuster ist eine Halbachse des Kreuzes bevorzugt parallel zur Trommelachse abgebildet.

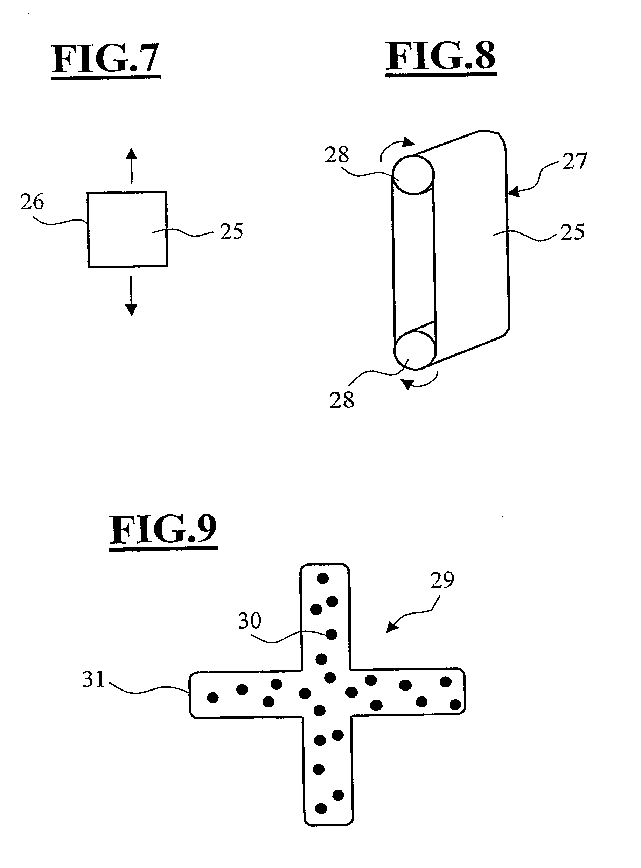

Figur 7 zeigt eine Streuplatte 26 mit streuender Oberfläche 25. Die Streuplatte 26 kann aus Glas oder Kunststoff gefertigt sein. Die Streuplatte 26 kann lateral hin und her verschiebbar ausgeführt sein. Dies ist durch 2 Pfeile angedeutet.

Figur 8 zeigt einen Streuvorhang 27 mit streuender Oberfläche 25. Der Streuvorhang 27 kann beispielsweise aus Metall gefertigt sein. Der Streuvorhang 27 ist über zwei Rotationstrommeln 28 drehbar angeordnet. Die in diesem Fall beispielhaft vorgesehene Drehrichtung ist durch Pfeile angedeutet.

Figur 9 zeigt in einfacher Weise skizziert ein kreuzförmiges Specklemuster 29. Exemplarisch sind einige Speckles 30 dargestellt mit superponiertem kreuzförmigen Muster 31. Die Kreuzform ist zur besseren Erkennbarkeit für diese Skizze mit einer schwarzen Kontur ausgeführt.

**Bezugzeichenliste**

| | | | |
|---|---|---|---|
| 1 | Kopf | 29 | kreuzförmiges Specklemuster |
| 2 | Brille | 30 | Speckle |
| 3 | Vorrichtung | 31 | äußere Kreuzform |
| 4 | Videoeinrichtung / Aufnahmeinheit | | |
| 5 | Fixiereinrichtung | | |
| 6 | Fixiertarget | | |
| 7 | Kollimatoroptik | | |
| 8 | Teilerelement / teildurchlässiger Spiegel | | |
| 9 | Laseremitter | | |
| 10 | Streuscheibe | | |
| 11 | Motor | | |
| 12 | Umlenkspiegel | | |
| 13 | Testperson / Kunde mit Brille | | |
| 14 | Laserdiode | | |
| 15 | Diffraktives optisches Element (DOE) | | |
| 16 | Spatial light modulator (SLM) | | |
| 17 | Spiegel | | |
| 18 | (Fresnel-)Linse | | |
| 19 | Schutzelement / Schutzscheibe | | |
| 20 | Lichtleiter | | |
| 21 | Steuer- und Auswerterichtung | | |
| 22 | Laserstrahl | | |
| 23 | Blitz | | |
| 24 | Streuwalze | | |
| 25 | Oberfläche | | |
| 26 | Streuplatte | | |
| 27 | Streuvorhang | | |
| 28 | Rotationstrommel | | |

## Patentansprüche

1. Vorrichtung zum Ermitteln von Zentrierdaten für eine Brille (2) für eine Testperson, mit einer von einem Computer aus ansteuerbaren, elektronische Bilder der bebrillten Augenpartie der Testperson aufnehmenden Aufnahmeeinheit (4) und mit einer Fixationseinrichtung (5) zum Erzeugen eines Fixationsmusters für die Testperson, **dadurch gekennzeichnet, dass** die Aufnahmeeinheit (4) hinter einem das Fixationsmuster in das Blickfeld der Testperson leitendes Teilerelement (8) angeordnet ist und dass die Fixationseinrichtung (5) eine zumindest ein Specklemuster als Fixationsmuster erzeugende Fixationseinrichtung (5) ist.

2. Vorrichtung (3), nach Anspruch 1, **dadurch gekennzeichnet, dass** die Fixationseinrichtung eine zumindest ein bestimmtes Specklemuster, insbesondere ein ringförmiges, kreuzförmiges oder sternförmiges Specklemuster, erzeugende Fixationseinrichtung ist.

3. Vorrichtung (3) nach Anspruch 1 oder 2, **dadurch gekennzeichnet, dass** die Aufnahmeeinheit (4) als Videokamera oder Photoapparat ausgebildet ist.

4. Vorrichtung (3) nach einem der vorhergehenden Ansprüche, **dadurch gekennzeichnet, dass** die Fixationseinrichtung (5) eine Strahlungsquelle und ein Streuelement (10, 24, 26, 27) umfasst, wobei die Strahlungsquelle einen kohärenten Lichtstrahl über das Streuelement (10, 24, 26, 27) als Specklemuster auf das Teilerelement (8) wirft.

5. Vorrichtung (3) nach Anspruch 4, **dadurch gekennzeichnet, dass** die Strahlungsquelle einen Laseremitter (9) als Laserdiode, oder einen He-Ne-Laser umfasst.

6. Vorrichtung (3) nach einem der Ansprüche 1 bis 5, **dadurch gekennzeichnet, dass** das Teilerelement (8) als teildurchlässiger Spiegel oder als Strahlteilerwürfel ausgebildet ist.

7. Vorrichtung (3) nach einem der Ansprüche 3 bis 6, **dadurch gekennzeichnet, dass** das Streuelement (10, 24, 26, 27) bewegbar, insbesondere rotierbar, angeordnet ist.

8. Vorrichtung (3) nach Anspruch 7, **dadurch gekennzeichnet, dass** ein Motor (11) zur Bewegung des Streuelement (10, 24, 26, 27) vorgesehen ist.

9. Vorrichtung (3) nach einem der vorhergehenden Ansprüche, **dadurch gekennzeichnet, dass** das Specklemuster ins Unendliche, zumindest aber auf einen Abstand größer 5m abgebildet ist.

10. Vorrichtung (3) nach Anspruch 9, **dadurch gekennzeichnet, dass** das Specklemuster über eine zwischen Streuelement (10, 24, 26, 27) und Teilerelement (8) angeordnete Kollimatoroptik (7) ins Unendliche, zumindest aber auf einen Abstand größer 5m abgebildet ist.

11. Vorrichtung (3) nach Anspruch 10, **dadurch gekennzeichnet, dass** die Kollimatoroptik (7) mit asphärischen Linsenflächen, insbesondere mit asphärischen Fresnellinsenflächen ausgebildet ist.

12. Vorrichtung (3) nach einem der Ansprüche 4 bis 11, **dadurch gekennzeichnet, dass** zwischen Streuelement (10, 24, 26, 27) und Teilerelement (8), bevorzugt zwischen Streuelement (10, 24, 26, 27) und Kollimatoroptik (7) ein Umlenkspiegel (12)angeordnet ist.

13. Vorrichtung (3) nach einem der vorhergehenden Ansprüche, **dadurch gekennzeichnet, dass** zur Erzeugung zumindest eines Specklemusters die Fixationseinrichtung (5) zumindest ein diffraktives optisches Element (DOE) (15) umfasst.

14. Vorrichtung (3) nach einem der vorhergehenden Ansprüche, **dadurch gekennzeichnet, dass** zur Erzeugung zumindest eines Specklemusters, vorzugsweise einer beliebigen Anzahl an Specklemustern, die Fixationseinrichtung (5) zumindest einen Spatial Light Modulator (SLM) (16), umfasst.

15. Vorrichtung (3) nach Anspruch 13 oder 14, **dadurch gekennzeichnet, dass** zumindest ein diffraktives optisches Element (DOE) (15) oder zumindest ein Spatial Light Modulator (SLM) (16) dazu ausgebildet sind, ein kreuz- oder ringförmiges Muster oder eine Kombination eines kreuz- und ringförmigen Musters zu erzeugen.

16. Vorrichtung (3) nach einem der vorhergehenden Ansprüche, **dadurch gekennzeichnet, dass** ein der Aufnahmeeinheit (4) zugeordneter Blitz (23) mit einem Lichtleiter (20) verbunden ist, wobei der Lichtleiter (20) bevorzugt ein in Richtung des zu vermessenden Kunden (13) hinführender Lichtleiter (20) ist.

17. Vorrichtung (3) nach einem der Ansprüche 4-16, **dadurch gekennzeichnet, dass** das Streuelement als Streuscheibe (10), Streuwalze (24), Streuplatte (26) oder Streuvorhang (27) ausgebildet ist.

18. Verfahren zum Ermitteln von Zentrierdaten für eine Brille, **dadurch gekennzeichnet, dass** ein Specklemuster als Fusionsreiz für einen zu untersuchenden Kunden erzeugt wird, eine Bildaufnahme zumindest der bebrillten Augenpartie des Kunden gemacht wird und anhand dieser Bildaufnahme nach mathematischen Verfahren die Zentrierdaten für die Brille bestimmt werden, wobei eine Vorrichtung nach einem der Ansprüche 1 bis 17 Verwendung findet.

## Claims

1. Device for establishing centring data for spectacles (2) for a test subject, comprising a recording unit (4), which is actuatable by a computer and records electronic images of the bespectacled eye area of the test subject, and comprising a fixation apparatus (5) for generating a fixation pattern for the test subject, **characterized in that** the recording unit (4) is arranged behind a splitter element (8) guiding the fixation pattern into the field of view of the test subject and **in that** the fixation apparatus (5) is a fixation apparatus (5) generating at least one speckle pattern as fixation pattern.

2. Device (3) according to Claim 1, **characterized in that** the fixation apparatus is a fixation apparatus generating at least one specific speckle pattern, in particular a ring-shaped, cross-shaped or star-shaped speckle pattern.

3. Device (3) according to Claim 1 or 2, **characterized in that** the recording unit (4) is embodied as a video camera or photo camera.

4. Device (3) according to one of the preceding claims, **characterized in that** the fixation apparatus (5) comprises a radiation source and a scattering element (10, 24, 26, 27), wherein the radiation source casts a coherent light beam as a speckle pattern onto the splitter element (8) via the scattering element (10, 24, 26, 27).

5. Device (3) according to Claim 4, **characterized in that** the radiation source comprises a laser emitter (9) as a laser diode or a He-Ne laser.

6. Device (3) according to one of Claims 1 to 5, **characterized in that** the splitter element (6) is embodied as a semi-transparent mirror or as a beam splitter cube.

7. Device (3) according to one of Claims 3 to 6, **characterized in that** the scattering element (10, 24, 26, 27) is arranged in a movable, in particular rotatable, manner.

8. Device (3) according to Claim 7, **characterized in that** a motor (11) is provided for moving the scattering element (10, 24, 26, 27).

9. Device (3) according to one of the preceding claims, **characterized in that** the speckle pattern is imaged at infinity, but at least at a distance of greater than 5 m.

10. Device (3) according to Claim 9, **characterized in that** the speckle pattern is imaged at infinity, but at least at a distance of greater than 5 m, by means of collimator optics (7) arranged between the scattering element (10, 24, 26, 27) and the splitter element (8).

11. Device (3) according to Claim 10, **characterized in that** the collimator optics (7) are formed with aspherical lens surfaces, in particular with aspherical Fresnel lens surfaces.

12. Device (3) according to one of Claims 4 to 11, **characterized in that** a deflection mirror (12) is arranged between the scattering element (10, 24, 26, 27) and the splitter element (8), preferably between the scattering element (10, 24, 26, 27) and the collimator optics (7).

13. Device (3) according to one of the preceding claims, **characterized in that** the fixation apparatus (5) comprises at least one diffractive optical element (DOE) (15) for generating at least one speckle pattern.

14. Device (3) according to one of the preceding claims, **characterized in that** the fixation apparatus (5) comprises at least one spatial light modulator (SLM) (16) for generating at least one speckle pattern, preferably any number of speckle patterns.

15. Device (3) according to Claim 13 or 14, **characterized in that** at least one diffractive optical element (DOE) (15) or at least one spatial light modulator (SLM) (16) is embodied to generate a cross-shaped or ring-shaped pattern or a combination of a cross-shaped and ring-shaped pattern.

16. Device (3) according to one of the preceding claims, **characterized in that** a flash (23) assigned to the recording unit (4) is connected to an optical waveguide (20), wherein the optical waveguide (20) preferably is an optical waveguide (20) leading in the direction of the customer (13) to be measured.

17. Device (3) according to one of Claims 4-16, **characterized in that** the scattering element is embodied as a diffusing disc (10), diffusing roll (24), diffusing plate (26) or diffusing curtain (27).

18. Method for establishing centring data for spectacles, **characterized in that** a speckle pattern is generated as a fusion stimulus for a customer to be examined, an image recording is made of at least the bespectacled eye area of the customer and the centring data for the spectacles are determined on the basis of this image recording according to the mathematical methods, wherein use is made of a device according to one of Claims 1 to 17.

## Revendications

1. Dispositif destiné à obtenir des données de centrage pour des lunettes (2) destinées à une personne soumise à un test, comprenant une unité d'acquisition (4) acquérant des images électroniques pouvant être commandées à partir d'un ordinateur, de la zone oculaire de la personne soumise à un test, qui est munie des lunettes et comportant un dispositif de fixation (5) destiné à générer un motif de fixation pour la personne soumise à un test, **caractérisé en ce que** l'unité d'acquisition (4) est disposée à l'arrière d'un élément diviseur (8) acheminant le motif de fixation dans le champ de vision de la personne soumise à un test et **en ce que** le dispositif de fixation (5) est un dispositif de fixation (5) générant au moins un motif de tavelure en tant que motif de fixation.

2. Dispositif (3) selon la revendication 1, **caractérisé en ce que** le dispositif de fixation est un dispositif de fixation générant au moins un motif de tavelure déterminé, notamment un motif de tavelure annulaire, cruciforme ou en étoile.

3. Dispositif (3) selon la revendication 1 ou 2, **caractérisé en ce que** l'unité d'acquisition (4) est réalisée sous la forme d'une caméra vidéo ou d'un appareil photo.

4. Dispositif (3) selon l'une quelconque des revendications précédentes, **caractérisé en ce que** le dispositif de fixation (5) comprend une source de lumière et un élément diffusant (10, 24, 26, 27), dans lequel la source de lumière projette un faisceau de lumière cohérent par l'intermédiaire de l'élément diffusant (10, 24, 26, 27) en tant que motif de tavelure sur l'élément diviseur (8).

5. Dispositif (3) selon la revendication 4, **caractérisé en ce que** la source de lumière comprend un émetteur laser (9) tel qu'une diode laser ou qu'un laser He-Ne.

6. Dispositif (3) selon l'une quelconque des revendications 1 à 5, **caractérisé en ce que** l'élément diviseur (8) est réalisé sous la forme d'un miroir partiellement transparent ou sous la forme d'un cube diviseur de faisceau.

7. Dispositif (3) selon l'une quelconque des revendications 3 à 6, **caractérisé en ce que** l'élément diffusant (10, 24, 26, 27) est disposé de manière à être mobile, notamment tournant.

8. Dispositif (3) selon la revendication 7, **caractérisé en ce qu'**il est prévu un moteur (11) pour déplacer l'élément diffusant (10, 24, 26, 27).

9. Dispositif (3) selon l'une quelconque des revendications précédentes, **caractérisé en ce que** l'image du motif de tavelure est formée à l'infini, mais au moins à une distance supérieure à 5 m.

10. Dispositif (3) selon la revendication 9, **caractérisé en ce que** l'image du motif de tavelure est formée par l'intermédiaire d'une optique de collimation (7) disposée entre l'élément diffusant (10, 24, 26, 27) et l'élément diviseur (8) à l'infini, mais au moins à une distance supérieure à 5 m.

11. Dispositif (3) selon la revendication 10, **caractérisé en ce que** l'optique de collimation (7) est réalisée de manière à comporter des surfaces de lentilles asphériques, et notamment à comporter des surfaces de lentilles de Fresnel asphériques.

12. Dispositif (3) selon l'une quelconque des revendications 4 à 11, **caractérisé en ce qu'**un miroir de déviation (12) est disposé entre l'élément diffusant (10, 24, 26, 27) et l'élément diviseur (8), et de préférence entre l'élément diffusant (10, 24, 26, 27) et l'optique de collimation (7).

13. Dispositif (3) selon l'une quelconque des revendications précédentes, **caractérisé en ce que**, pour générer au moins un motif de tavelure, le dispositif de fixation (5) comprend au moins un élément optique diffractant (DOE) (15).

14. Dispositif (3) selon l'une quelconque des revendications précédentes, **caractérisé en ce que**, pour générer au moins un motif de tavelure, et de préférence, un nombre quelconque de motifs de tavelure, le dispositif de fixation (5) comprend au moins un modulateur spatial de lumière (SLM, Spatial Light Modulator) (16).

15. Dispositif (3) selon la revendication 13 ou 14, **caractérisé en ce qu'**au moins un élément optique diffractant (DOE) (15) ou au moins un modulateur spatial de lumière (SLM) (16) sont conçus pour générer un motif cruciforme ou annulaire ou une combinaison de motifs cruciforme et annulaire.

16. Dispositif (3) selon l'une quelconque des revendications précédentes, **caractérisé en ce qu'**un flash (23) associé à l'unité d'acquisition (4) est relié à un guide de lumière (20), dans lequel le guide de lumière (20) est de préférence un guide de lumière (20) conduisant dans la direction du client (13) à mesurer.

17. Dispositif (3) selon l'une quelconque des revendications 4 - 16, **caractérisé en ce que** l'élément diffusant est réalisé sous la forme d'une lame diffusante (10), d'un cylindre diffusant (24), d'une plaque diffusante (26) ou d'un rideau diffusant (27).

18. Procédé destiné à obtenir des données de centrage pour des lunettes, **caractérisé en ce qu'**un motif de tavelure est généré en tant que stimulus de fusion pour un client à examiner, une acquisition d'image d'au moins la zone oculaire du client qui est munie de lunettes est effectuée et, sur la base de cette acquisition d'image et après des traitements mathématiques, les données de centrage destinées aux lunettes sont déterminées, dans lequel un dispositif selon l'une quelconque des revendications 1 à 17 est utilisé.
